Europäisches Patentamt

**European Patent Office**

**Office européen des brevets**

(19)

(11) Numéro de publication: **0 048 211**

**A1**

(12) # DEMANDE DE BREVET EUROPEEN

(21) Numéro de dépôt: **81420134.9**

(22) Date de dépôt: **10.09.81**

(51) Int. Cl.³: **B 29 D 17/00**

(30) Priorité: **16.09.80 FR 8020141**

(43) Date de publication de la demande:
**24.03.82 Bulletin 82/12**

(84) Etats contractants désignés:
**AT BE CH DE FR GB IT LI LU NL SE**

(71) Demandeur: **SEMATRA S.A.**
**7 rue de la Fontaine Case Postale Rive 299**
**CH-1211 Geneve 3(CH)**

(72) Inventeur: **Matthey, Maurice**
**3, route de Versoix**
**Geneve(CH)**

(74) Mandataire: **Karmin, Roger et al,**
**Cabinet MONNIER 150, cours Lafayette**
**F-69003 Lyon(FR)**

(54) Procédé de moulage de pièces par compression et dispositif pour sa mise en oeuvre.

(57) Le dispositif comprend un bâti (1) et une traverse (3) renfermant au moins un moule de conformation (20) et un moule de finition (30) à ouverture verticale. La partie inférieure (20a) du moule de conformation (20) et la matrice inférieure (28) du moule de finition (30) sont portées par les pistons (14, 15) de deux vérins verticaux. La partie supérieure (20b) du moule de conformation est déplaçable afin de venir grâce à un vérin (23-24) entre les deux matrices (28, 29) du moule de finition (30) dont la matrice supérieure est fixée à la traverse (3). La partie (20b) du moule (20) comprend des moyens de retenue et d'expulsion de l'ébauche établie dans ledit moule.

EP 0 048 211 A1

./...

Fig. 1

Procédé de moulage de pièces par compression et dispositif pour sa mise en oeuvre

La présente invention est relative à un procédé de production de pièces par moulage par compression, notamment pour la réalisation de disques de reproduction de sons ou de disques à image optique, et à un dispositif destiné à la mise en oeuvre de ce procédé.

Le moulage considéré concerne bien entendu des matières thermo-plastiques propres à être produites par compression. On peut citer à titre d'exemple de telles matières les résines acétals.

Les procédés actuellement utilisés pour la production d'objets tels que les disques pour la reproduction de sons consistent à déposer dans un moule chaud une certaine quantité de matière, puis à refroidir ce moule de manière à provoquer la polymérisation et par conséquent le durcissement de l'objet terminé.

De ce fait toute la masse des moules doit être chauffée à une température élevée de l'ordre par exemple de 160° C ce qui nécessite une énergie importante du fait du poids relativement élevé des moules.

Suivant le volume des pièces à produire il est nécessaire de dépenser une énergie plus ou moins importante pour procéder au refroidissement du moule par exemple en employant un liquide à basse température.

On voit qu'ainsi on assite à un gaspillage important d'énergie par suite de la succession des opérations de chauffage et de refroidissement des moules. En plus de la dépense d'énergie il faut également considérer la perte de temps due au cycle de longue durée du moulage ainsi réalisé.

Les perfectionnements qui font l'objet de la présente invention visent à remédier à ces inconvénients et à supprimer le chauffage et le refroidissement de masses importantes de métal à chaque cycle de moulage en vue de réaliser une économie considérable d'énergie et de temps.

A cet effet et conformément à l'invention on dissocie le moule destiné à la fabrication des pièces considérées en un premier moule de simple conformation qui demeure continuellement chauffé, et en un second moule de finition dans lequel la pièce ébauchée dans le premier est transférée de manière à être polymérisée par refroidissement tout en étant définitivement gravée grâce aux empreintes taillées dans les deux pièces de ce dernier moule.

Ainsi il suffit de maintenir le moule de conformation à la température nécessaire à la production d'une ébauche pâteuse, tandis que le moule de finition est constamment refroidi.

Le dessin annexé, donné à titre d'exemple, permettra de mieux comprendre l'invention, les caractéristiques qu'elle présente et les avantages qu'elle est susceptible de procurer :

Fig. 1 est une coupe transversale d'un dispositif de moulage réalisé en vue de la mise en oeuvre du procédé suivant l'invention.

Fig. 2 en est une coupe suivant II-II (fig. 1).

Fig. 3 illustre à grande échelle le système de transfert de l'ébauche pâteuse et les moyens de retenue et d'expulsion de celle-ci.

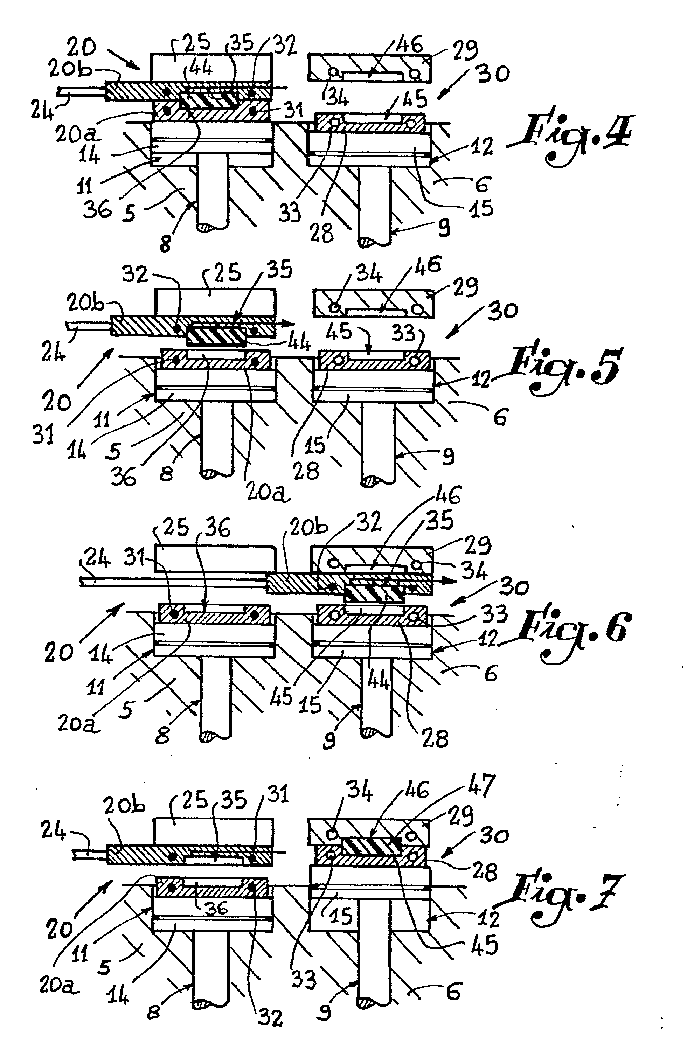

Fig. 4 à 7 illustrent les principales phases du procédé suivant l'invention.

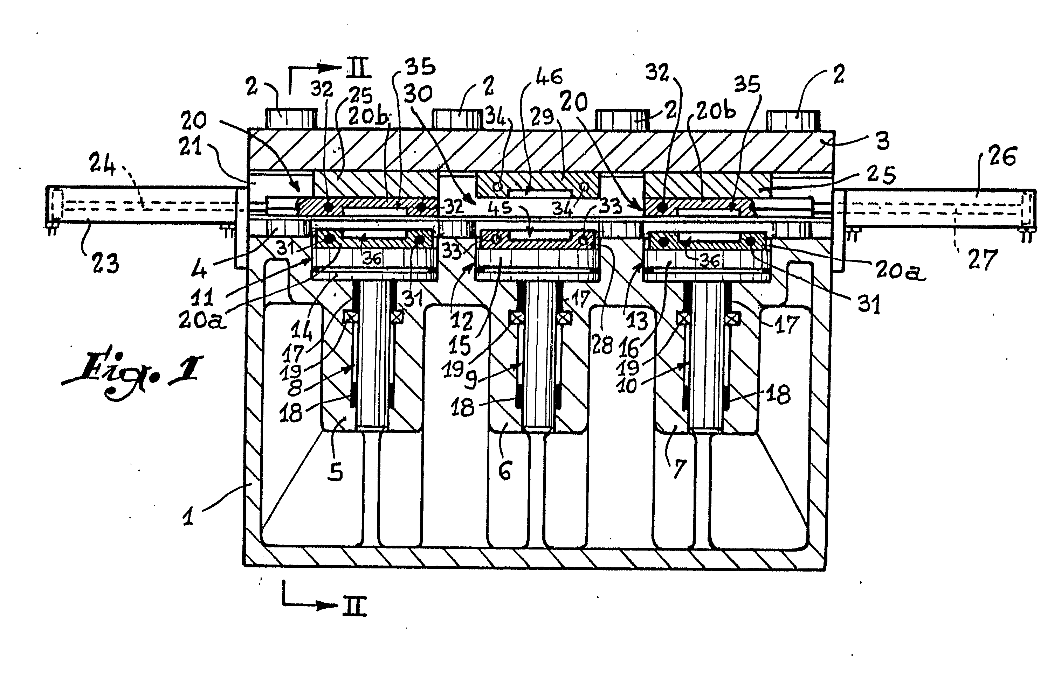

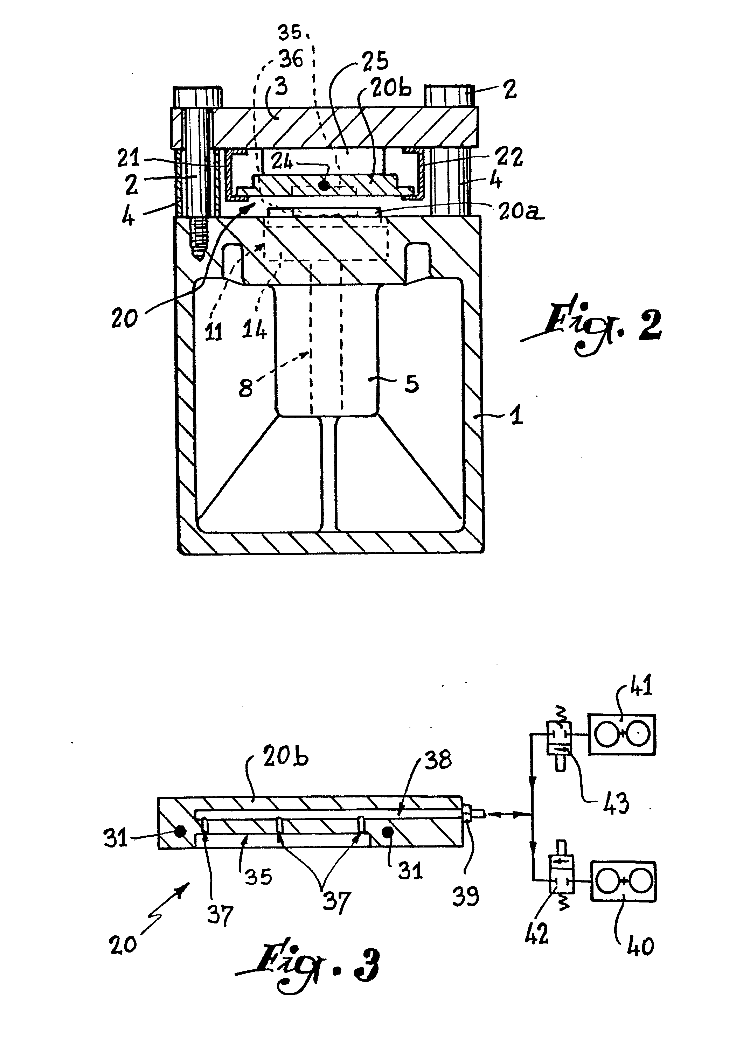

On a représenté très schématiquement en fig. 1 et 2 un dispositif pour la mise en oeuvre du procédé suivant l'invention. Celui-ci comprend essentiellement un bâti 1 supportant par sa face supérieure à l'aide de colonnettes 2 une traverse 3. On observe que les colonettes 2 sont constituées par une

3   **0048211**

vis ou élément analogue et une entretoise tubulaire 4 qui l'entoure pour déterminer l'espacement entre les faces en vis-à-vis du bâti et de la traverse.

Le bâti 1 se présente sous la forme d'une pièce creuse comprenant trois bossages 5, 6 et 7 prévus de manière à constituer le cylindre d'un vérin hydraulique à simple effet. Chacun des bossages précités comporte donc un alésage étagé 8, 9, 10 débouchant dans le bas du bossage correspondant tandis que son extrémité supérieure aboutit dans un chambrage de diamètre nettement plus grand référencé 11, 12 et 13.

Un piston 14, 15, 16 est engagé dans chacun des alésages étagés précités, sa queue coopérant avec l'alésage 8, 9, 10 tandis que sa tête, qui comporte un joint d'étanchéité non référencé, coopère avec jeu fonctionnel avec le chambrage correspondant. On observe que chaque tige de piston se déplace dans des coussinets 17, 18 et qu'un joint 19 est placé dans une gorge de chaque alésage 8, 9, 10. Une arrivée de fluide sous pression, non représentée, est prévue sous la tête de chaque piston de manière qu'on puisse le faire déplacer vers le haut tandis que l'évacuation de ce fluide provoque la redescente du piston par son propre poids ou par l'intermédiaire de ressorts appropriés. Bien entendu les trois vérins décrits précédemment pourraient être prévus à double effet.

La tête des pistons 14 et 16 porte la partie inférieure 20a d'un moule 20 dont la partie supérieure 20b est réalisée sous la forme d'un chariot propre à se déplacer longitudinalement par rapport à deux glissières 21, 22 solidaires de la face inférieure de la traverse 3. Le déplacement de la partie 20b du moule 20 est effectuée au moyen d'un vérin pneumatique 23 dont l'extrémité libre de la tige de piston 24 est rendue solidaire de ladite partie de moule. Entre cette partie 20b et la traverse 3 on a assemblé à cette dernière une cale 25 dont le rôle sera mieux expliqué plus loin.

4

On note que le piston 16 qui se déplace dans le bossage 7 porte lui aussi la demi-partie inférieure 20a d'un moule 20 dont la partie supérieure 20b se déplace dans les glissières 21, 22 par l'intermédiaire d'un second vérin 26 symétrique par rapport à celui 23 et dont la tige de piston 27 est associée à la partie supérieure 20b du moule.

Le piston 15 coopérant avec le bossage central 6 porte une matrice inférieure 28 tandis qu'une matrice supérieure 29 est fixée en dessous de la traverse 1, ces deux matrices constituant un moule de finition 30.

Des perforations 31, 32 sont ménagées respectivement dans les deux parties du moule 20 de manière à chauffer celui-ci par l'intermédiaire d'une circulation de fluide chaud ou de cannes chauffantes engagées dans lesdites perforations. Bien entendu on retrouve les mêmes éléments chauffants dans le second moule 20 du dispositif suivant l'invention.

Au contraire, des perçages 33, 34 sont prévus dans les deux matrices du moule central de finition 30 en vue d'y assurer le maintien d'une température basse.

On a illustré en fig. 3 à une échelle plus grande la partie supérieure 20b de chacun des moules de conformation 20. On note que cette partie 20b comporte une dépression 35 correspondant à celle 36 de la partie inférieure 20a de telle manière qu'une fois ces deux dépressions mises en vis-à-vis elles déterminent une cavité ayant la forme de l'ébauche qu'on désire produire comme on l'expliquera mieux plus loin.

On observe que la dépression 35 est reliée par une multiplicité de canaux 37 de très faible diamètre à un trou 38 prévu borgne dont le débouché associé à un raccord 39 est relié d'une part à une pompe à vide 40 et d'autre part à un compresseur 41 par l'intermédiaire respectivement d'une électro-vanne 42, 43.

Le fonctionnement et le procédé de fabrication d'un objet en matière thermoplastique par compression découlent de ce qui précède. Les explications ci-dessous sont relatives au procédé suivant l'invention appliqué à un moule de conformation 20 et à un moule de finition 30.

Lorsque le moule 20 est ouvert, c'est-à-dire qu'il se présente comme illustré en fig. 1 on dépose dans la dépression 36 de sa partie inférieure 20a une certaine quantité thermoplastique à l'état normal ou préchauffé. Dans ce dernier cas la matière est recueillie à la sortie d'une extrudeuse conventionnelle. Du fluide sous pression est envoyé sous la tête du piston 14 de telle sorte que les dépressions 35 et 36 viennent se mettre en vis-à-vis l'une de l'autre, tandis que la matière est comprimée dans la cavité qu'elles déterminent. La force développée par le piston permet une fermeture efficace du moule dont la partie supérieure vient buter sur la cale 25 pour éviter que les glissières n'encaissent des efforts trop importants. Le moule étant chauffé à une température appropriée un début de polymérisation de la matière plastique s'effectue de sorte qu'elle constitue alors une ébauche 44 se présentant sous forme pâteuse. Pendant cette première opération les deux électro-vannes 42 et 43 sont fermées. Lorsque la première phase est terminée, on ouvre l'électro-vanne 42 de manière que le vide se fasse dans le trou 38 et les canaux 37 si bien que l'ébauche 44 est maintenue dans la dépression 35. L'ouverture du moule, c'est-à-dire l'abaissement du piston 14 libère l'ébauche par rapport à la dépression 36 de la partie inférieure 20a du moule (fig. 5). Le vérin 23 est alors alimenté de manière que sa tige de piston 24 déplace la partie supérieure 20b du moule en direction du milieu du moule de finition 30 comme illustré en fig. 6. Par l'intermédiaire d'une commande appropriée l'électro-vanne 42 est fermée tandis que celle 43 est ouverte de telle sorte que de l'air sous pression arrive dans la dépression 35 par l'intermédiaire du trou 38 et des canaux 37. Cette arrivée d'air sous pression provoque la chute de l'ébauche 44 dans l'empreinte inférieure 45, c'est-à-dire celle ménagée dans la matrice 28. On inverse alors le sens de déplacement du vérin 23 de manière à ramener la partie supérieure 20b du moule 20 à sa position initiale, comme illustré en fig. 7. Juste après, le vérin 15 est alimenté de manière que les deux matrices du moule de finition 30 soient appliquées sous pression l'une contre l'autre. Les gravures éventuellement pratiquées dans l'une et/ou l'autre des deux empreintes 45 et 46 se reportent de manière précise et fidèle sur l'ébauche 44 et le refroidissement de celle-ci s'effectue pendant le temps nécessaire. Lorsque ce temps est écoulé on supprime la pression actionnant le piston 15 de manière que celui-ci revienne à sa position initiale. Le moule 30 s'ouvre et la pièce définitive 47 est éjectée. Bien entendu pendant le temps de refroidissement de cette pièce 47 une nouvelle ébauche peut être moulée grâce au moule 20.

Si on dispose d'un second moule de conformation 20 comme on l'a représenté en fig. 1 les opérations s'effectuent de la même manière qu'avec le premier moule, c'est-à- dire conformément aux explications ci-dessus. Comme il va de soi il est nécessaire que le fonctionnement des trois vérins soit synchronisé de manière à diminuer au maximum les temps morts.

Lorsqu'il s'agit de disques, le fait d'utiliser le procédé et le dispositf suivant l'invention permet d'améliorer nettement la qualité de l'article fini du fait de la température constante du moule de finiton 30.

En outre le procédé décrit fait nettement apparaître que les calories cédées par les deux moules de conformation 20 ne sont utilisées que pour le chauffage des quelques dizaines de grammes de matière plastique utilisée pour la réalisation de l'ébauche 44 et que de même manière le refroidissement de cette dernière dans le moule de finition n'entraîne qu'une faible perte d'énergie de telle sorte qu'on réalise ainsi une économie considérable par rapport au procédé classique. De plus cette économie porte également sur les moyens mis en oeuvre dans les procédés classiques pour dissiper les calories des moules et ramener leur température à une valeur faible pour provoquer le durcissement de la pièce.

Il est évident qu'on doit disposer pour rendre le procédé automatique, d'une centrale de commandes propre à synchroniser les mouvements décrits ci-dessus.

Il doit d'ailleurs être entendu que la description qui précède n'a été donnée qu'à titre d'exemple et qu'elle ne limite nullment le domaine de l'invention dont on ne sortirait pas en remplaçant les détails d'exécution décrits par tous autres équivalents.

Revendications de brevet

1. Procédé de moulage de pièces par compression, notamment de disques pour la reproduction de sons ou de disques à image optique, caractérisé en ce qu'il consiste à déposer de la matière entre les deux parties (20a, 20b) d'un moule de conformation (20) convenablement chauffé, puis à fermer ce moule de manière que la matière épouse les contours de sa cavité (35, 36), à ouvrir ensuite le moule (20) puis à transférer une des parties (20b) de celui-ci contenant une ébauche (44) entre les deux matrices (28, 29) d'un moule de finition (30), à ramener à sa place originale la partie (20b) déplacée du moule (20) après avoir déposé l'ébauche (44) dans le moule de finition (30), à fermer ce dernier en vue d'une part de graver la pièce suivant les formes des empreintes (45, 46) du moule de finition (30), et d'autre part de refroidir la pièce (47), et enfin à démouler celle-ci après ouverture du moule de finition (30).

2. Procédé suivant la revendication 1, caractérisé en ce que la matière déposée dans le moule de conformation (20) est préchauffée de manière qu'elle se présente alors sous forme pâteuse.

3. Procédé suivant la revendication 2, caractérisée en ce qu'il consiste à prévoir deux moules de conformation (20) et un moule de finition (30) qui reçoit alternativement des ébauches (44) des deux autres moules.

4. Dispositif caractérisé en ce qu'il est destiné à la mise en oeuvre du procédé suivant l'une quelconque des revendications 1 à 3.

5. Dispositif suivant la revendication 4, caractérisé en ce qu'il consiste en un outillage comportant un bâti (1) et une traverse (3) renfermant au moins un moule de conformation (20) placé à côté d'un moule de finition (30), ces moules étant à ouverture verticale de manière que leur élément supérieur (20b) (29) soit respectivement mobile en translation et fixé à la traverse (3) du bâti (1).

6. Dispositif suivant la revendication 5, caractérisé en ce que la partie supérieure (20b) du moule de conformation (20) vient, lorsque désiré, entre les deux matrices (28, 29) du moule de finition (30) grâce à un moyen de translation (23-24) qui provoque son déplacement alternatif dans des glissières (21-22).

7. Dispositif suivant la revendication 6, caractérisé en ce que la partie supérieure (20b) du moule de conformation (20) est pourvue de moyens de retenue et d'expulsion de l'ébauche (44) que ce moule (20) est destiné à produire.

8. Dispositif suivant la reveendication 7, caractérisé en ce que les moyens de retenue et d'expulsion sont constitués par des canaux (37, 38) reliés alternativement à une source de vide (40), puis à une source de pression (41), certains (37) de ceux-ci débouchant dans la dépression (35) de la partie supérieure (20b) du moule de conformation (20).

9. Dispositif suivant la revendication 8, caractérisé en ce que la partie supérieure (20b) du moule de conformation est assemblée à la tige de piston (24) d'un vérin (23).

10. Dispositif suivant la revendication 9, caractérisé en ce qu'en position de conformation de la pièce à produire la partie supérieure (20b) du moule de conformation (20) est en appui contre une butée fixe (25) disposée au-dessus de lui.

11. Dispositif duivant l'une quelconque des revendications 9 et 10, caractérisé en ce qu'il comprend deux moules de conformation (20) disposés de part et d'autre du moule de finition (30) et en ce qu'un second vérin (26) est prévu pour assurer la translation de la partie supérieure (20b) dudit deuxième moule (20).

Fig. 1

0048211

*Fig. 2*

*Fig. 3*

*Fig.4*

*Fig.5*

*Fig.6*

*Fig.7*

### Office européen des brevets

## RAPPORT DE RECHERCHE EUROPEENNE

EP 81 42 0134.9

| Catégorie | Citation du document avec indication, en cas de besoin des parties pertinentes | Revendica-tion concernée |
|---|---|---|
| | **DOCUMENTS CONSIDERES COMME PERTINENTS** | |
| | US - A - 3 514 813 (W.S. WESTERMANN)<br>* colonne 2, lignes 4 à 10 *<br>-- | 1,4,5 |
| | FR - A - 1 201 948 (DEUTSCHE GRAMMOPHON GESELLSCHAFT)<br>* revendication 1 *<br>-- | 1,2 |
| A | DE - B - 1 197 607 (N.V. PHILIPS)<br>* revendication 1 *<br>-- | |
| A | DE - A - 2 007 936 (RCA)<br>* revendication 1 * .<br>& FR - A - 2 035 667<br>-- | |
| A | DE - A1 - 2 406 322 (SEKVENTOR)<br>* revendication 1 *<br>-- | |
| A | US - A - 3 663 136 (W.S. WESTERMANN)<br>* revendication 1 *<br>---- | |

**CLASSEMENT DE LA DEMANDE (Int Cl.3)**

B 29 D 17/00

**DOMAINES TECHNIQUES RECHERCHES (Int Cl.3)**

B 29 C  3/00
B 29 D 17/00
G 11 B  3/70
G 11 B  7/26

**CATEGORIE DES DOCUMENTS CITES**

X: particulièrement pertinent
A: arrière-plan technologique
O: divulgation non-écrite
P: document intercalaire
T: théorie ou principe à la base de l'invention
E. demande faisant interférence
D  document cité dans la demande
L  document cite pour d'autres raisons
&  membre de la même famille, document correspondant

Le présent rapport de recherche a été établi pour toutes les revendications

| Lieu de la recherche | Date d'achèvement de la recherche | Examinateur |
|---|---|---|
| Berlin | 03-12-1981 | BITTNER |

OEB Form 1503.1  06.78